# FASCICULE DE BREVET EUROPEEN

(11) **EP 3 641 116 B1**
(45) Date de publication et mention de la délivrance du brevet: **09.03.2022**
(21) Numéro de dépôt: 19202601.1
(22) Date de dépôt: 10.10.2019
(51) Int. Cl.: H02M 1/36, H02M 3/158, H02M 1/00

(54) **ALIMENTATION À DÉCOUPAGE**
SCHALTNETZTEIL
SWITCHING MODE POWER SUPPLY

(30) Priorité: 15.10.2018 FR 1859528
(43) Date de publication de la demande: 22.04.2020
(73) Titulaire: STMicroelectronics (Rousset) SAS, 13790 Rousset (FR)
(72) Inventeur: ORTET, Sebastien, 13100 BEAURECUEIL (FR); DAVINO, Didier, 83910 POURRIERES (FR); THOMAS, Cedric, 13100 AIX-EN-PROVENCE (FR)
(74) Mandataire: Cabinet Beaumont

(56) Documents cités:
- US-A1- 2007 182 397
- US-A1- 2008 101 102

## Description

### Domaine technique

La présente description concerne de façon générale les alimentations à découpage et leurs modes de fonctionnement.

### Technique antérieure

Les alimentations à découpage sont des convertisseurs DC/DC qui incorporent un ou plusieurs interrupteurs. Comme les autres types d'alimentations, les alimentations à découpage transfèrent une puissance fournie par une source DC à une charge, en modifiant une des caractéristiques de courant ou de tension. Les documents US2007/182397 et US2008/101102 divulguent d'alimentations à découpage.

### Résumé de l'invention

L'invention est définie par les caractéristiques du dispositif selon la revendication 1 et du procédé selon la revendication 2.

Un mode de réalisation prévoit un dispositif électronique (300) comprenant une alimentation à découpage (102, 302, 602) de type buck et une charge (104) alimentée par l'alimentation à découpage, l'alimentation à découpage comprenant :- des premier (108) et deuxième (110) interrupteurs reliés en série entre une source (112) d'une deuxième tension (VH) et une source (114) d'une troisième tension (VL) ;- un circuit (130) de génération des signaux de commande des premier et deuxième transistors ; et- un circuit d'initialisation (308) recevant en entrée une tension de sortie (Vout), présente sur un nœud de sortie (106) de l'alimentation à découpage, un premier signal de commande (ENA) configuré pour autoriser le fonctionnement de l'alimentation à découpage (302) et une première tension (VREF1), et fournissant au circuit de génération (130) un deuxième signal (EN-FSM) permettant la préparation de l'alimentation et un troisième signal (SD-RDY) prévenant le circuit de génération (130) qu'il est possible d'alimenter la charge (104), le circuit d'initialisation comprenant :- un comparateur (412), dont une première entrée est couplée à une source de la première tension (VREF1) et dont une deuxième entrée est connectée à un premier noeud (400), le comparateur fournissant à une machine d'état un quatrième signal (CMP-OUT), la machine d'état recevant en outre le premier signal (ENA) et fournissant le deuxième signal (EN-FSM) et le troisième signal (SD-RDY) ;- une deuxième capacité (410) couplée entre le premier noeud (400) et la masse ;- une source de courant (404) couplée au premier noeud (400) par un troisième interrupteur (402) ;- un quatrième interrupteur (406), couplé entre le premier noeud (400) et le noeud de sortie (106) de l'alimentation à découpage ; et- un cinquième interrupteur (408), couplé entre le premier nœud (400) et la source de la première tension (VREF1), l'alimentation étant configurée pour fonctionner comme suit :-lorsque le premier signal (ENA) est nul, l'alimentation à découpage est éteinte, et le circuit (130) de génération des signaux de commande assure que le noeud de sortie (106) de l'alimentation (300) est dans un état de haute impédance,- lors du redémarrage de l'alimentation à découpage, le premier signal (ENA) est égal à 1 et une étape d'initialisation est exécutée, au cours de laquelle la tension de sortie (Vout) est amenée à la valeur de la première tension (VREF1),- lors de l'étape d'initialisation de l'alimentation à découpage, le quatrième interrupteur (406) est fermé, les troisième (402) et cinquième (408) interrupteurs sont ouverts,- si la tension (VN) sur le premier nœud (400) est inférieure à la première tension (VREF1), le quatrième interrupteur (406) est fermé, les troisième (402) et cinquième (408) interrupteurs sont ouverts, et le deuxième signal (EN-FSM) prend une valeur correspondant à l'allumage de l'alimentation à découpage en fonctionnement normal,- lorsque la tension (VN) sur le premier noeud (400) atteint la première tension (VREF1), la machine d'état (414) assure l'ouverture du troisième interrupteur (402), la fermeture du cinquième interrupteur (408) et que le premier interrupteur (108) est fermé et le deuxième interrupteur (110) est ouvert,- lorsque la tension de sortie (Vout) atteint la première tension (VREF1), l'alimentation peut entrer dans un mode de fonctionnement choisit par un utilisateur, et- si la tension sur le premier nœud (400) est supérieure à la première tension (VREF1), le troisième signal (SD-RDY) prend une valeur signifiant que la charge peut être alimentée, le nœud de sortie est mis en haute impédance, le quatrième interrupteur (406) est ouvert, le cinquième interrupteur (408) est fermé, et la première capacité est déchargée dans la charge, le quatrième interrupteur (406) est ouvert et le cinquième interrupteur (408) est fermé.

Un autre mode de réalisation prévoit un procédé de commande d'un dispositif électronique (300) comprenant une alimentation à découpage (302) de type buck et une charge (104) alimentée par l'alimentation à découpage,l'alimentation à découpage comprenant :- des premier (108) et deuxième (110) interrupteurs reliés en série entre une source (112) d'une deuxième tension (VH) et une source (114) d'une troisième tension (VL) ;- un circuit (130) de génération des signaux de commande des premier et deuxième transistors ; et- un circuit d'initialisation (308) recevant en entrée une tension de sortie (Vout) , présente sur un nœud de sortie (106) de l'alimentation à découpage, un premier signal de commande (ENA) configuré pour autoriser le fonctionnement de l'alimentation à découpage (302) et une première tension (VREF1), et fournissant au circuit de génération (130) un deuxième signal (EN-FSM) permettant la préparation de l'alimentation et un troisième signal (SD-RDY) prévenant le circuit de génération (130) qu'il est possible d'alimenter la charge (104), le circuit d'initialisation comprenant :- un comparateur (412), dont une première entrée est couplée à une source de la première tension (VREF1) et dont une deuxième entrée est connectée à un premier noeud (400), le comparateur fournissant à une machine d'état un quatrième signal (CMP-OUT), la machine d'état recevant en outre le premier signal (ENA) et fournissant le deuxième signal (EN-FSM) et le troisième signal (SD-RDY) ;- une deuxième capacité (410) couplée entre le premier noeud (400) et la masse ;- une source de courant (404) couplée au premier noeud (400) par un troisième interrupteur (402) ;-un quatrième interrupteur (406), couplé entre le premier noeud (400) et le noeud de sortie (106) de l'alimentation à découpage ; et- un cinquième interrupteur (408), couplé entre le premier nœud (400) et une source de la première tension (VREF1),l'alimentation fonctionnant comme suit :- lorsque le premier signal (ENA) est nul, l'alimentation à découpage est éteinte, et le circuit (130) de génération des signaux de commande assure que le noeud de sortie (106) de l'alimentation (300) est dans un état de haute impédance,- lors du redémarrage de l'alimentation à découpage, le premier signal (ENA) est égal à 1 et une étape d'initialisation est exécutée, au cours de laquelle la tension de sortie (Vout) est amenée à la valeur de la première tension (VREF1),- lors de l'étape d'initialisation de l'alimentation à découpage, le quatrième interrupteur (406) est fermé, les troisième (402) et cinquième (408) interrupteurs sont ouverts,- si la tension (VN) sur le premier nœud (400) est inférieure à la première tension (VREF1), le quatrième interrupteur (406) est fermé, les troisième (402) et cinquième (408) interrupteurs sont ouverts, et le deuxième signal (EN-FSM) prend une valeur correspondant à l'allumage de l'alimentation à découpage en fonctionnement normal,- lorsque la tension (VN) sur le premier noeud (400) atteint la première tension (VREF1), la machine d'état (414) assure l'ouverture du troisième interrupteur (402), la fermeture du cinquième interrupteur (408) et que le premier interrupteur (108) est fermé et le deuxième interrupteur (110) est ouvert,- lorsque la tension sur le premier nœud (400) atteint la première tension (VREF1), les deuxième (110) et troisième interrupteur (402) est ouvert, les premier (108) et cinquième interrupteurs (408) sont fermés et la première capacité (122) est chargée, et- si la tension sur le premier nœud (400) est supérieure à la première tension (VREF1), le troisième signal (SD-RDY) prend une valeur signifiant que la charge peut être alimentée, le nœud de sortie est mis en haute impédance, le quatrième interrupteur (406) est ouvert, le cinquième interrupteur (408) est fermé, et la première capacité est déchargée dans la charge, le quatrième interrupteur (406) est ouvert et le cinquième interrupteur (408) est fermé.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un mode de réalisation d'un circuit électronique comprenant une alimentation à découpage ;
la figure 2 représente des variations de signaux du dispositif de la figure 1;
la figure 3 représente un autre mode de réalisation d'un circuit électronique comprenant une alimentation à découpage ;
la figure 4 représente plus en détail une partie du dispositif électronique de la figure 3 ;
la figure 5 représente des exemples de variations d'une tension du dispositif électronique des figures 3 et 4 ;
la figure 6 représente un autre mode de réalisation d'un circuit électronique comprenant une alimentation à découpage ; et
la figure 7 représente des exemples de variations de la tension de sortie et de la tension de référence du mode de réalisation de la figure 6.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

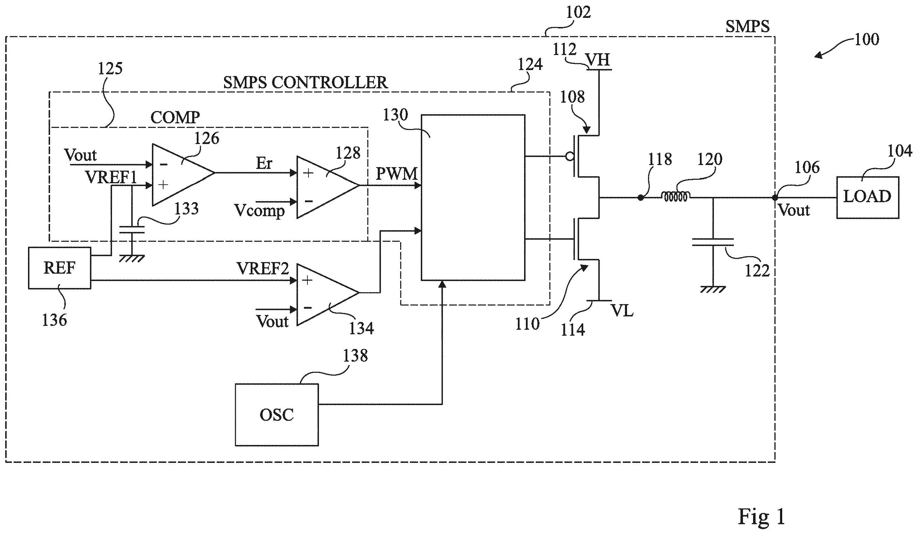

La figure 1 représente un mode de réalisation d'un circuit électronique 100 comprenant une alimentation à découpage 102 (SMPS). L'alimentation à découpage peut fonctionner en divers modes de fonctionnement, par exemple un mode normal, un mode dit "Bypass", etc.

L'alimentation à découpage alimente une charge 104 (LOAD). Plus précisément, la charge 104 est reliée, par exemple connectée, à un noeud 106 de sortie de l'alimentation à découpage 102 sur lequel est appliquée une tension Vout.

L'alimentation à découpage 102 comprend deux interrupteurs, par exemple des transistors 108 et 110, reliés en série entre une source 112 d'une tension de référence haute VH et une source 114 d'une tension de référence basse VL, par exemple la masse. Le transistor 108 est par exemple un transistor PMOS relié, de préférence connecté, par sa source et son drain, entre la source 112 et un noeud 118. Le transistor 110 est par exemple un transistor NMOS relié, de préférence connecté, par sa source et son drain, entre la source 114 et le noeud 118. Le noeud 118 est relié au noeud de sortie 106 par l'intermédiaire d'une inductance 120. Le noeud de sortie 106 est relié à la masse par l'intermédiaire d'une capacité 122.

Les transistors 108 et 110 sont commandés par un circuit de commande 124 (SMPS CONTROLLER). Le circuit de commande 124 comprend un circuit de comparaison 125 (COMP). Le circuit 125 comprend un comparateur 126, par exemple un amplificateur d'erreur. Le comparateur 126 reçoit en entrée une tension de référence VREF1, inférieure à la tension VH, et la tension Vout. La sortie du comparateur 116 fournit un signal Er, représentatif de la différence de tension entre la tension de référence VREF1 et la tension Vout. L'entrée du comparateur 126 recevant la tension de référence VREF1 est, de plus, couplée à la masse par une capacité 133.

Le circuit de comparaison 125 comprend de plus un comparateur 128 recevant en entrée le signal Er et un signal VRamp périodique en dents de scie. Le comparateur 128 fournit en sortie un signal PWM modulé en largeur d'impulsion (Pulse Width Modulation). Le signal PWM est un signal binaire périodique comprenant un état haut et un état bas. Le rapport cyclique du signal PWM est contrôlé par le signal Er. Ainsi, plus la différence entre la tension de référence VREF1 et la tension de contre réaction, c'est-à-dire le signal Er, est importante, plus le rapport cyclique du signal PWM est important.

Le circuit de commande 124 comprend de plus un circuit 130 de génération des signaux de commande des transistors 108 et 110. Plus précisément, lorsque le signal PWM est à l'état haut, le circuit 130 ferme l'interrupteur 108 et ouvre l'interrupteur 110, et lorsque le signal PWM est à l'état bas le circuit 130 ouvre l'interrupteur 108 et ferme l'interrupteur 110.

L'alimentation à découpage 102 comprend de plus un autre comparateur 134 recevant en entrée une autre tension de référence VREF2 et la tension de sortie Vout. La tension de référence VREF2 correspond, de préférence, à une tension similaire à la tension VREF1 dont les variations sont plus rapides. La sortie du comparateur 134 est fournie au circuit 130 de génération. Les tensions de référence VREF1 et VREF2 sont fournies par un circuit 136 (REF) de génération des tensions de référence.

L'alimentation à découpage 102 comprend de plus un oscillateur 138 dont la sortie est connectée au circuit 130 de génération.

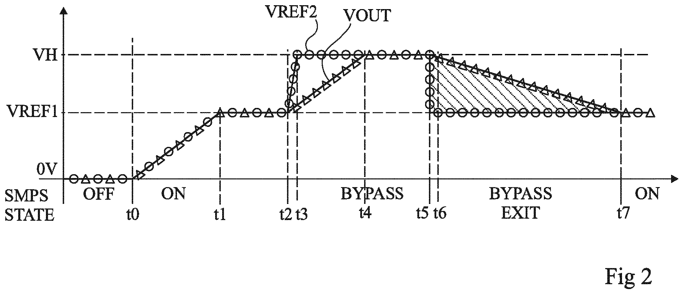

La figure 2 représente des variations en fonction du temps de signaux du dispositif de la figure 1 et illustre des étapes de fonctionnement de l'alimentation à découpage 102. Plus précisément, la figure 2 illustre la tension de sortie Vout (triangle), la tension de référence VREF2 (rond), et l'état de l'alimentation 102 (SMPS STATE).

Avant un instant t0, l'alimentation 102 est éteinte (OFF), les tensions Vout et VREF2 sont donc nulles. A l'instant t0, l'alimentation 102 est mise en fonctionnement dans un mode de fonctionnement normal (ON), c'est-à-dire un mode de fonctionnement dans lequel les interrupteurs 108 et 110 s'ouvrent et se ferment en alternance, commandés par le circuit 130. La capacité 122 se charge donc jusqu'à un instant t1 où la tension Vout devient égale à la valeur de tension VREF1 et est maintenue à cette valeur. Au cours de cette phase de fonctionnement dans le mode normal, la tension VREF2 a sensiblement la même valeur que la tension Vout.

A un instant T2, l'alimentation 102 passe dans un mode dit de "Bypass" (BYPASS), au cours duquel l'interrupteur 108 est maintenu fermé et l'interrupteur 110 est maintenu ouvert. Au cours de cette phase de fonctionnement, le noeud de sortie 102 de l'alimentation à découpage reçoit donc directement, et de manière continue, la puissance fournie par la source 112. Ainsi, la tension Vout augmente jusqu'à un instant t4 auquel il atteint la valeur VH.

La tension VREF2 augmente à partir de l'instant t2 de manière à atteindre la valeur VH à un instant t3, compris entre t2 et t4.

L'oscillateur 138 est éteint durant ce mode de Bypass.

A un instant T5, l'alimentation 102 entre dans une phase transitoire de sortie du mode de Bypass (BYPASS EXIT). Durant cette phase transitoire, l'oscillateur 138 est remis en marche, de manière à préparer le retour du mode de fonctionnement normal. La tension VREF2 diminue jusqu'à atteindre, à un instant t6, la valeur de VREF1. La durée entre t5 et t6 est par exemple inférieure à 2 cycles d'horloge.

A l'instant t5, l'interrupteur 108 est ouvert. Ainsi, les interrupteurs 108 et 110 sont tous deux ouverts et le noeud de sortie 106 est dans un état de haute impédance. Au cours de cette phase de fonctionnement, la capacité 122 se décharge donc dans la charge 104 jusqu'à devenir égale à VREF2 à un instant t7. Cela est déterminé par le comparateur 134. La sortie du comparateur 134 commande alors le circuit 130 de manière à entrer dans le mode de fonctionnement normal.

Une autre solution pour diminuer la tension aux bornes de la capacité 122, et donc la tension de sortie de l'alimentation, à la sortie du mode de Bypass aurait été de décharger la capacité dans la masse par l'intermédiaire de l'interrupteur 110. Cependant, l'énergie déchargée serait alors perdue.

Un avantage du mode de réalisation des figures 1 et 2 est donc que l'énergie de la capacité 122 est utilisée et n'est pas perdue.

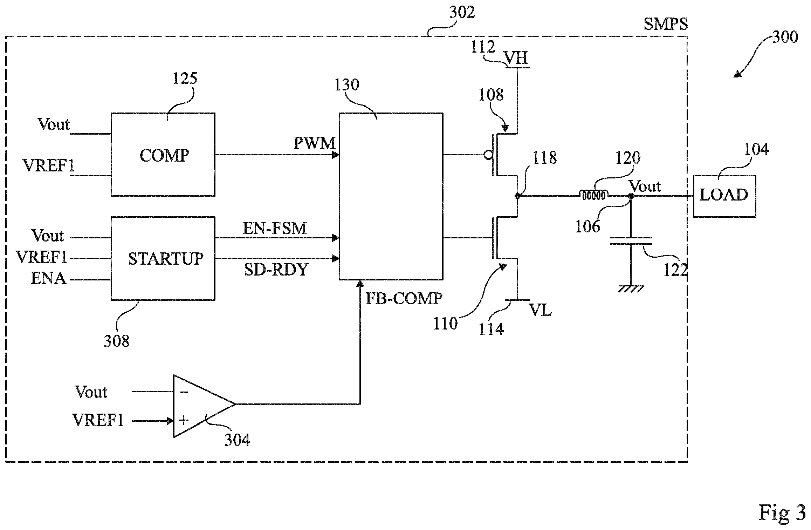

La figure 3 représente un autre mode de réalisation d'un circuit électronique 300 comprenant une alimentation à découpage 302 (SMPS). Le circuit 300 comprend des éléments similaires à des éléments du circuit 100 de la figure 1 et de préférence reliés entre eux de la même manière. Ces éléments sont désignés par les mêmes références et ne seront pas détaillés de nouveau. En particulier, le circuit électronique 300 comprend :
- la charge 104 ;
- la capacité 122 ;
- l'inductance 120 ;
- les interrupteurs 108 et 110 ;
- le circuit de génération de signaux de commande 130 ; et
- le circuit de comparaison 125.

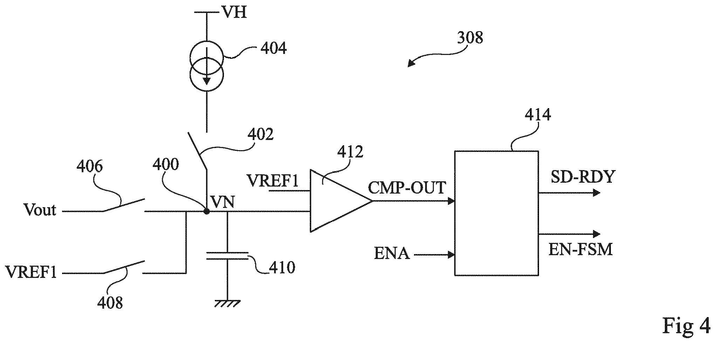

L'alimentation à découpage 302 comprend, en outre, un circuit d'initialisation 308 (STARTUP) recevant en entrée la tension de sortie Vout, la tension de référence VREF1 et un signal de commande ENA. Le circuit d'initialisation 308 fournit au circuit 130 un signal EN-FSM et un signal SD-RDY. Le signal ENA est un signal autorisant le fonctionnement de l'alimentation à découpage 302. Le signal EN-FSM permet la préparation de l'alimentation, par exemple la mise en marche de l'oscillateur. Le signal SD-RDY prévient le circuit 130 qu'il est possible d'alimenter la charge 104. Un exemple d'un tel circuit est représenté en figure 4.

L'alimentation à découpage 302 comprend, de plus, un comparateur 304. Le comparateur 304 compare la tension de sortie Vout et la tension de référence VREF1 et fournit un signal FB-COMP, représentatif de cette comparaison, au circuit 130.

Lorsque l'alimentation 302 est éteinte, la capacité 122 peut se décharger ou se charger, par exemple avec des courants de fuite. Ainsi, lorsque l'alimentation est rallumée, la tension aux bornes de la capacité 122, et donc la tension de sortie de l'alimentation à découpage est inconnue. En particulier, il est inconnu si la tension de sortie Vout est supérieure ou inférieure à VREF1. Le circuit d'initialisation 308 permet de déterminer si la capacité 122 doit être chargée ou déchargée de manière à atteindre la tension VREF1 et permet de déterminer l'instant auquel l'alimentation 302 peut alimenter la charge.

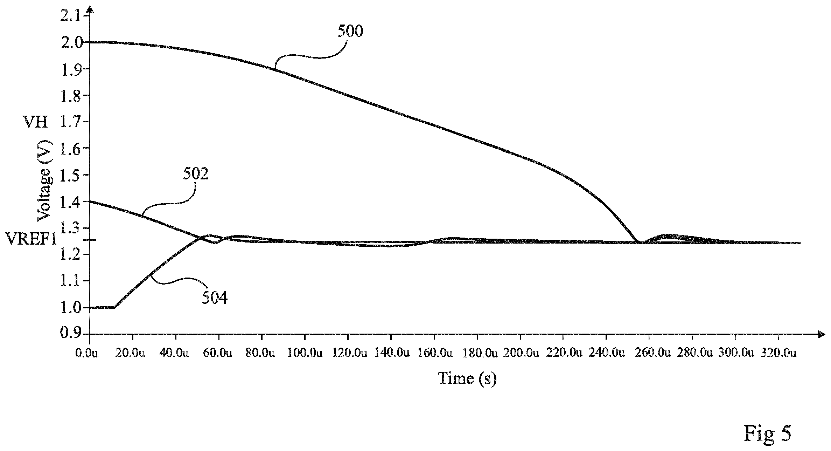

Le fonctionnement du mode de réalisation de la figure 3 sera décrit plus en détail en relation avec les figures 4 et 5. La figure 4 représente plus en détail une partie du dispositif électronique 300 de la figure 3. Plus précisément, la figure 4 représente un exemple de circuit d'initialisation 308. La figure 5 représente trois courbes 500, 502 et 504, chacune correspondant à un exemple de variation de la tension Vout en fonction du temps.

Le circuit 308 comprend un noeud principal 400 (tension VN). Le noeud 400 est couplé à une source d'une tension de référence ou d'alimentation, par exemple la tension VH, par un interrupteur 402 en série avec une source de courant 404. Plus précisément, la source de courant est reliée au noeud 400 par l'intermédiaire de l'interrupteur 402. Le noeud 400 est de plus relié par un interrupteur 406 à l'entrée sur laquelle est appliquée la tension de sortie Vout, et par un interrupteur 408 à l'entrée sur laquelle est appliquée la tension de référence VREF1. Le noeud 400 est aussi relié à la masse par l'intermédiaire d'une capacité 410.

La capacité 410 est par exemple plus petite que la capacité 122 (figure 3).

Le noeud 400 est connecté à une entrée d'un comparateur 412, l'autre entrée recevant la tension VREF1. Le comparateur 412 fournit le signal CMP-OUT à une machine d'état 414. Le signal CMP-OUT est représentatif de la comparaison entre la tension VN et la tension VREF1. La machine d'état reçoit, en outre, le signal ENA, et fournit en sortie les signaux SD-RDY et EN-FSM du circuit 308. De plus, la machine d'état commande les interrupteurs 402, 406 et 408.

Lorsque le signal ENA est nul, l'alimentation à découpage est éteinte, et le circuit 130, sur commande de la machine d'état 414, assure que le noeud de sortie 106 de l'alimentation 300 est dans un état de haute impédance. La valeur de la tension Vout est inconnue.

Lors du redémarrage de l'alimentation à découpage, le signal ENA est égal à 1 et une étape d'initialisation est exécutée, au cours de laquelle la tension Vout est amenée à la valeur VREF1.

Au cours de cette étape d'initialisation, l'interrupteur 406 est fermé, et les interrupteurs 402 et 408 sont ouverts. Ainsi, la tension sur le noeud 400, c'est-à-dire la tension aux bornes de la capacité 410, devient donc égale à la tension Vout. Simultanément, le comparateur 412 est allumé. Lorsque le comparateur 412 est prêt à fonctionner, le comparateur détermine si la tension VN sur le noeud 400 est supérieure ou inférieure à la tension VREF1 et fournit cette information à la machine d'état par le signal CMP-OUT.

Si la tension VN est inférieure à la tension VREF1 (courbe 504, figure 5), alors l'interrupteur 406 est fermé et l'interrupteur 402 est ouvert, l'interrupteur 408 restant ouvert. La capacité 410 est ainsi chargée jusqu'à la tension VREF1. Simultanément, la machine d'état 414 commande au circuit 130 (figure 3) de commencer l'allumage de l'alimentation à découpage en fonctionnement normal (EN-FSM = 1), par exemple en allumant un oscillateur. L'alimentation à découpage n'attend plus que la permission d'alimenter la charge par l'intermédiaire du signal SD-RDY.

Lorsque la tension VN atteint la tension VREF1, le comparateur 412 fourni cette information à la machine d'état 414 (signal CMP-OUT) . La machine d'état 414 assure l'ouverture de l'interrupteur 402 et la fermeture de l'interrupteur 408. La capacité 410 est, dans cette configuration, utilisée pour fournir la tension VREF1.

De plus, la machine d'état 414 assure que l'interrupteur 108 est fermé et que l'interrupteur 110 est ouvert de manière à charger la capacité 122. Lorsque la tension Vout atteint la tension VREF1, le comparateur 304 fournit cette information au circuit 130. L'alimentation à découpage peut ensuite entrer dans un mode de fonctionnement choisi par l'utilisateur, par exemple en mode Bypass, ou en mode normal.

Si la tension VN est supérieure à la tension VREF1 (courbes 500 et 502, figure 5), alors le signal SD-RDY prend immédiatement la valeur 1, c'est-à-dire que la charge peut être alimentée. Le noeud de sortie 106 est mis dans un état de haute impédance. Ainsi, la capacité 122 est peu à peu déchargée dans la charge 104, de manière à l'alimenter. De plus, l'interrupteur 406 est ouvert et l'interrupteur 408 est fermé.

Le signal EN-FSM prend la valeur 1, permettant ainsi à l'alimentation de fonctionner en mode normal, dès que la tension Vout atteint la valeur VREF1. Cette information est fournie par le signal FB-COMP du comparateur 304 (figure 3).

Une autre solution aurait été de décharger entièrement la capacité 122 à chaque fois que l'alimentation 300 est éteinte, par exemple dans la masse, par l'intermédiaire de l'interrupteur 110. Ainsi, la tension Vout serait nulle et connue. Cependant, cette énergie serait perdue.

Ainsi, un avantage est que l'énergie utilisée pour que la tension Vout atteigne VREF1 au démarrage de l'alimentation 302 est, dans le cas où la tension Vout est supérieure à la tension VREF1, nulle, et, dans le cas où la tension Vout est inférieure à la tension VREF1, une énergie inférieure à celle permettant la charge complète de la capacité 122.

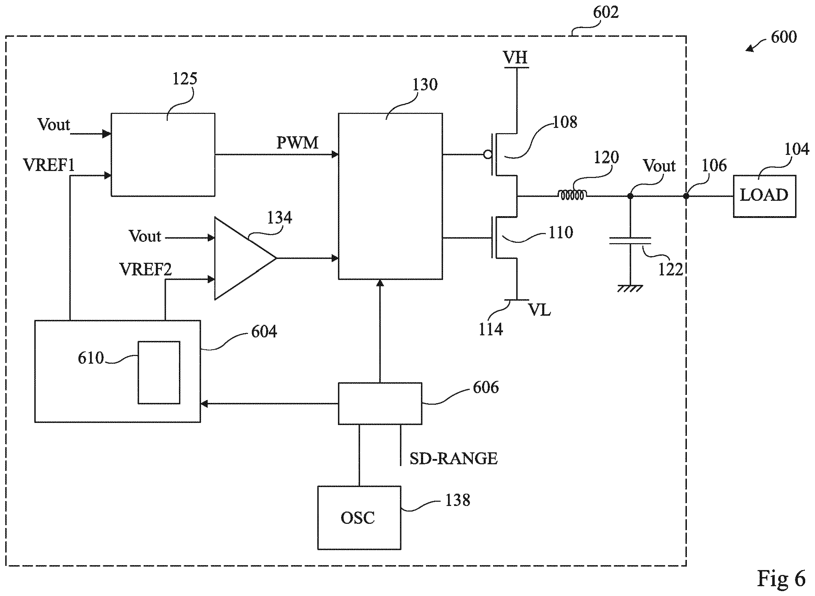

La figure 6 représente un autre mode de réalisation d'un circuit électronique 600 comprenant une alimentation à découpage 602. Le circuit 600 comprend des éléments similaires à des éléments du circuit 100 de la figure 1 et/ou du circuit 300 de la figure 3, de préférence reliés de la même manière. Ces éléments sont désignés par les mêmes références et ne seront pas détaillés de nouveau. En particulier, le circuit électronique 600 comprend :
- la charge 104 ;
- la capacité 122 ;
- l'inductance 120 ;
- les interrupteurs 108 et 110 ;
- le circuit de génération de signaux de commande 130 ;
- le circuit de comparaison 125 ;
- l'oscillateur 138 ; et
- le comparateur 134.

L'alimentation 602 comprend en outre un circuit 604 de génération des signaux de référence VREF1 et VREF2. L'alimentation 602 comprend un circuit 606 fournissant des signaux de commande aux circuits 604 et 130.

Le circuit de commande 606 est relié à une entrée de l'oscillateur 138 et à un noeud d'application d'un signal SD-RANGE.

Le circuit 604 est adapté à fournir des signaux de référence de différentes valeurs, selon le signal de commande provenant du circuit 606. Par exemple, il est possible de faire varier la tension de référence VREF2 entre au moins deux valeurs prédéterminées. Pour ce faire, le circuit 604 comprend un circuit 610 de résistance variable. Par exemple, la résistance du circuit 610 peut être choisie entre au moins deux valeurs prédéterminées, chaque valeur de résistance correspondant à une valeur de tension de référence.

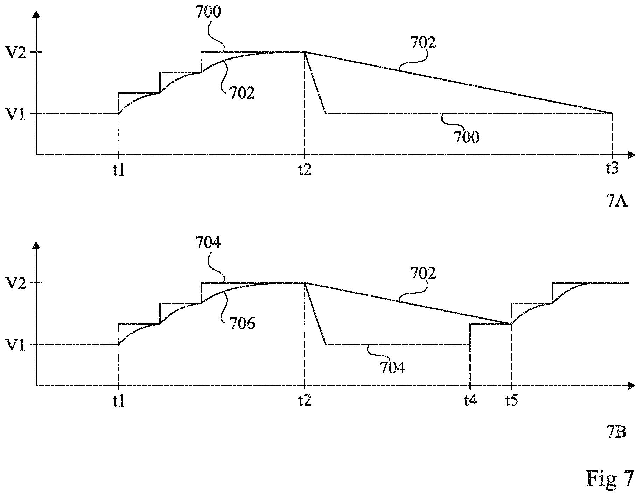

La figure 7 représente des exemples de variations de la tension de sortie et de la tension de référence du mode de réalisation de la figure 6. Plus précisément, la figure 7 comprend deux chronogrammes 7A et 7B illustrant chacun la variation de la tension de sortie Vout et la tension de référence VREF2.

Le chronogramme 7A comprend une courbe 700 représentant la tension VREF2 et une courbe 702 représentant la tension Vout. Les tensions VREF2 et Vout sont initialement à une valeur basse V1. On souhaite augmenter la tension de sortie jusqu'à une valeur haute V2. Pour cela, à un instant t1, la tension VREF2 est augmentée par paliers jusqu'à la valeur V2, trois paliers étant représentés en figure 7. Cette augmentation est effectuée en modifiant la valeur de résistance du circuit 610 par paliers. La tension de sortie Vout augmente aussi lors de la modification de la valeur de VREF2. Par exemple, la durée de chaque palier est choisie pour que la tension de sortie Vout puisse atteindre la valeur de la tension VREF2 avant que la tension VREF2 ne passe au palier suivant.

A un instant t2, le circuit 604 reçoit la commande de diminuer la tension Vout à la valeur V1. Le circuit 130 est alors réinitialisé. Durant le temps de cette réinitialisation, qui dure par exemple deux coups d'horloge, le noeud de sortie est mis en état de haute impédance par le circuit 606 et la tension VREF2 prend immédiatement la valeur basse sans paliers.

Ainsi, la tension Vout diminue jusqu'à atteindre V1 à un instant t3. L'alimentation à découpage 602 peut alors entrer dans le mode de fonctionnement normal, sur commande du comparateur 134.

Le chronogramme 7B comprend une courbe 704 représentant la tension VREF2 et une courbe 706 représentant la tension Vout.

Les variations des courbes 704 et 706 sont identiques aux variations des courbes 700 et 702 jusqu'à un instant t4, compris entre l'instant t2 et l'instant t3. Avant l'instant t4, la tension VREF2 est à la valeur V1 et la capacité 122 n'a pas fini sa décharge. A l'instant t4, le circuit 604 est commandé par le circuit 606, afin d'augmenter de nouveau la tension Vout jusqu'à la valeur V2. La tension VREF2 augmente donc par paliers.

A un instant t5, le comparateur 134 détermine que la tension Vout est égale à la tension VREF2. Le noeud de sortie 106 sort de l'état de haute impédance et la tension Vout recommence à augmenter en accordance avec la tension de référence.

Ainsi, la capacité 122 n'a pas été entièrement déchargée et la charge est moins couteuse en énergie.

On aurait pu choisir de diminuer la valeur de la tension VREF2 par paliers, de la même manière que la valeur de la tension VREF2 a été augmentée. Cependant, la capacité 122 se déchargerait alors dans la masse par l'intermédiaire de l'inductance 120, et l'énergie de la capacité 122 serait perdue.

Divers modes de réalisation et variantes ont été décrits. L'homme de l'art comprendra que certaines caractéristiques de ces divers modes de réalisation et variantes pourraient être combinées, et d'autres variantes apparaitront à l'homme de l'art. En particulier, le mode de réalisation décrit en relation avec les figures 1 et 2, le mode de réalisation décrit en relation avec les figures 3, 4 et 5 et le mode de réalisation décrit en relation avec les figures 6 et 7 peuvent être combinés deux à deux ou être tous combinés.

En particulier, le mode de réalisation décrit en relation avec les figures 1 et 2, et le mode de réalisation décrit en relation avec les figures 3, 4 et 5 peuvent être combinés. Le circuit de la figure 3 peut alors comprendre le comparateur 134, comme il est décrit en relation avec la figure 1, recevant en entrées la tension Vout et la tension VREF2. Le fonctionnement du circuit combinant les modes de réalisation des figures 1 à 5 est, lors du démarrage de l'alimentation, celui décrit en relation avec les figures 3, 4 et 5. Le fonctionnement du circuit combinant les modes de réalisation des figures 1 à 5 est, lors de la sortie du mode Bypass, celui décrit en relation avec les figures 1 et 2.

Le mode de réalisation décrit en relation avec les figures 6 et 7, et le mode de réalisation décrit en relation avec les figures 3, 4 et 5 peuvent être combinés. Le circuit de la figure 3 peut alors comprendre le comparateur 134 et les circuits 604 et 606, tels qu'ils sont décrits en relation avec les figures 6 et 7. Le fonctionnement du circuit combinant les modes de réalisation des figures 3 à 7 est, lors du démarrage de l'alimentation, celui décrit en relation avec les figures 3, 4 et 5. Le fonctionnement du circuit combinant les modes de réalisation des figures 3 à 7 est, après le démarrage, celui décrit en relation avec les figures 6 et 7.

Enfin, la mise en oeuvre pratique des modes de réalisation et variantes décrits est à la portée de l'homme du métier à partir des indications fonctionnelles données cidessus.

## Revendications

1. Dispositif électronique (300) comprenant une alimentation à découpage (102, 302, 602) de type buck et une charge (104) alimentée par l'alimentation à découpage, l'alimentation à découpage comprenant :
- des premier (108) et deuxième (110) interrupteurs reliés en série entre une source (112) d'une deuxième tension (VH) et une source (114) d'une troisième tension (VL) ;
- un circuit (130) de génération des signaux de commande des premier et deuxième transistors ; et
- un circuit d'initialisation (308) recevant en entrée une tension de sortie (Vout), présente sur un nœud de sortie (106) de l'alimentation à découpage, un premier signal de commande (ENA) configuré pour autoriser le fonctionnement de l'alimentation à découpage (302) et une première tension (VREF1), et fournissant au circuit de génération (130) un deuxième signal (EN-FSM) permettant la préparation de l'alimentation et un troisième signal (SD-RDY) prévenant le circuit de génération (130) qu'il est possible d'alimenter la charge (104), le circuit d'initialisation comprenant :
- un comparateur (412), dont une première entrée est couplée à une source de la première tension (VREF1) et dont une deuxième entrée est connectée à un premier noeud (400), le comparateur fournissant à une machine d'état un quatrième signal (CMP-OUT), la machine d'état recevant en outre le premier signal (ENA) et fournissant le deuxième signal (EN-FSM) et le troisième signal (SD-RDY) ;
- une deuxième capacité (410) couplée entre le premier noeud (400) et la masse ;
- une source de courant (404) couplée au premier noeud (400) par un troisième interrupteur (402) ;
- un quatrième interrupteur (406), couplé entre le premier noeud (400) et le noeud de sortie (106) de l'alimentation à découpage ; et
- un cinquième interrupteur (408), couplé entre le premier nœud (400) et la source de la première tension (VREF1), l'alimentation étant configurée pour fonctionner comme suit :
- lorsque le premier signal (ENA) est nul, l'alimentation à découpage est éteinte, et le circuit (130) de génération des signaux de commande assure que le noeud de sortie (106) de l'alimentation (300) est dans un état de haute impédance,
- lors du redémarrage de l'alimentation à découpage, le premier signal (ENA) est égal à 1 et une étape d'initialisation est exécutée, au cours de laquelle la tension de sortie (Vout) est amenée à la valeur de la première tension (VREF1),
- lors de l'étape d'initialisation de l'alimentation à découpage, le quatrième interrupteur (406) est fermé, les troisième (402) et cinquième (408) interrupteurs sont ouverts,
- si la tension (VN) sur le premier nœud (400) est inférieure à la première tension (VREF1), le quatrième interrupteur (406) est fermé, les troisième (402) et cinquième (408) interrupteurs sont ouverts, et le deuxième signal (EN-FSM) prend une valeur correspondant à l'allumage de l'alimentation à découpage en fonctionnement normal,
- lorsque la tension (VN) sur le premier noeud (400) atteint la première tension (VREF1), la machine d'état (414) assure l'ouverture du troisième interrupteur (402), la fermeture du cinquième interrupteur (408) et que le premier interrupteur (108) est fermé et le deuxième interrupteur (110) est ouvert,
- lorsque la tension de sortie (Vout) atteint la première tension (VREF1), l'alimentation peut entrer dans un mode de fonctionnement choisit par un utilisateur, et
- si la tension sur le premier nœud (400) est supérieure à la première tension (VREF1), le troisième signal (SD-RDY) prend une valeur signifiant que la charge peut être alimentée, le nœud de sortie est mis en haute impédance, le quatrième interrupteur (406) est ouvert, le cinquième interrupteur (408) est fermé, et la première capacité est déchargée dans la charge, le quatrième interrupteur (406) est ouvert et le cinquième interrupteur (408) est fermé.

2. Procédé de commande d'un dispositif électronique (300) comprenant une alimentation à découpage (302) de type buck et une charge (104) alimentée par l'alimentation à découpage,
l'alimentation à découpage comprenant :
- des premier (108) et deuxième (110) interrupteurs reliés en série entre une source (112) d'une deuxième tension (VH) et une source (114) d'une troisième tension (VL) ;
- un circuit (130) de génération des signaux de commande des premier et deuxième transistors ; et
- un circuit d'initialisation (308) recevant en entrée une tension de sortie (Vout), présente sur un nœud de sortie (106) de l'alimentation à découpage, un premier signal de commande (ENA) configuré pour autoriser le fonctionnement de l'alimentation à découpage (302) et une première tension (VREF1), et fournissant au circuit de génération (130) un deuxième signal (EN-FSM) permettant la préparation de l'alimentation et un troisième signal (SD-RDY) prévenant le circuit de génération (130) qu'il est possible d'alimenter la charge (104), le circuit d'initialisation comprenant :
- un comparateur (412), dont une première entrée est couplée à une source de la première tension (VREF1) et dont une deuxième entrée est connectée à un premier noeud (400), le comparateur fournissant à une machine d'état un quatrième signal (CMP-OUT), la machine d'état recevant en outre le premier signal (ENA) et fournissant le deuxième signal (EN-FSM) et le troisième signal (SD-RDY) ;
- une deuxième capacité (410) couplée entre le premier noeud (400) et la masse ;
- une source de courant (404) couplée au premier noeud (400) par un troisième interrupteur (402) ;
- un quatrième interrupteur (406), couplé entre le premier noeud (400) et le noeud de sortie (106) de l'alimentation à découpage ; et
- un cinquième interrupteur (408), couplé entre le premier nœud (400) et la source de la première tension
(VREF1),
l'alimentation fonctionnant comme suit :
- lorsque le premier signal (ENA) est nul, l'alimentation à découpage est éteinte, et le circuit (130) de génération des signaux de commande assure que le noeud de sortie (106) de l'alimentation (300) est dans un état de haute impédance,
- lors du redémarrage de l'alimentation à découpage, le premier signal (ENA) est égal à 1 et une étape d'initialisation est exécutée, au cours de laquelle la tension de sortie (Vout) est amenée à la valeur de la première tension (VREF1),
- lors de l'étape d'initialisation de l'alimentation à découpage, le quatrième interrupteur (406) est fermé, les troisième (402) et cinquième (408) interrupteurs sont ouverts,
- si la tension (VN) sur le premier nœud (400) est inférieure à la première tension (VREF1), le quatrième interrupteur (406) est fermé, les troisième (402) et cinquième (408) interrupteurs sont ouverts, et le deuxième signal (EN-FSM) prend une valeur correspondant à l'allumage de l'alimentation à découpage en fonctionnement normal,
- lorsque la tension (VN) sur le premier noeud (400) atteint la première tension (VREF1), la machine d'état (414) assure l'ouverture du troisième interrupteur (402), la fermeture du cinquième interrupteur (408) et que le premier interrupteur (108) est fermé et le deuxième interrupteur (110) est ouvert,
- lorsque la tension sur le premier nœud (400) atteint la première tension (VREF1), les deuxième (110) et troisième interrupteur (402) est ouvert, les premier (108) et cinquième interrupteurs (408) sont fermés et la première capacité (122) est chargée, et
- si la tension sur le premier nœud (400) est supérieure à la première tension (VREF1), le troisième signal (SD-RDY) prend une valeur signifiant que la charge peut être alimentée, le nœud de sortie est mis en haute impédance, le quatrième interrupteur (406) est ouvert, le cinquième interrupteur (408) est fermé, et la première capacité est déchargée dans la charge, le quatrième interrupteur (406) est ouvert et le cinquième interrupteur (408) est fermé.

3. Dispositif selon la revendication 1 ou procédé selon la revendication 2, dans lequel les troisième, quatrième et cinquième interrupteurs sont configurés pour être commandés par la machine d'état.

4. Dispositif selon la revendication 1 ou 3 ou procédé selon la revendication 2 ou 3, dans lequel le troisième interrupteur (406) est fermé et la deuxième capacité (410) est chargée jusqu'à ce que la tension à ses bornes soit la tension du noeud de sortie (106).

5. Dispositif ou procédé selon la revendication 4, dans lequel, après la charge de la deuxième capacité (410), si la tension de sortie (Vout) est inférieure à la première tension (VREF1), le troisième interrupteur (406) est ouvert et le deuxième interrupteur (402) est fermé jusqu'à ce que la tension du premier noeud (400) soit la première tension (VREF1), le deuxième interrupteur (402) est ensuite ouvert et le quatrième interrupteur (408) est ouvert.

6. Dispositif ou procédé selon la revendication 4 ou 5, dans lequel, après la charge de la deuxième capacité (410), si la tension de sortie (Vout) est supérieure à la première tension (VREF1), alors le quatrième interrupteur (408) est fermé et le troisième interrupteur est ouvert (406).

7. Dispositif selon la revendication 1, dans lequel l'alimentation à découpage (602) a une phase de fonctionnement au cours de laquelle un noeud de sortie (106) est dans un état de haute impédance alors qu'une tension de référence (VREF2) passe d'une première valeur haute (V2) à une première valeur basse (V1).

8. Procédé selon la revendication 2, dans lequel l'alimentation à découpage (602) a une phase de fonctionnement au cours de laquelle le noeud de sortie (106) est dans un état de haute impédance alors qu'une tension de référence (VREF2) passe d'une première valeur haute (V2) à une première valeur basse (V1).

9. Dispositif selon la revendication 7 ou procédé selon la revendication 8, comprenant une phase de fonctionnement au cours de laquelle la tension de référence (VREF2) augmente d'une deuxième valeur basse (V1) à une deuxième valeur haute (V2) par paliers.

10. Dispositif selon la revendication 1 ou procédé selon la revendication 2, dans lequel l'alimentation à découpage (102) a une première phase de fonctionnement dans laquelle le noeud de sortie (106) de l'alimentation à découpage est relié par le premier interrupteur (108) fermé à une source (112) d'une deuxième tension (VH), suivie d'une deuxième phase de fonctionnement dans laquelle le noeud de sortie (106) de l'alimentation est dans un état de haute impédance de sorte que la première capacité (122) connectée au noeud de sortie de l'alimentation à découpage se décharge au moins partiellement dans une charge (104).

11. Dispositif ou procédé selon la revendication 10, dans lequel un premier circuit (134) est adapté à comparer la tension du noeud de sortie (106) à une troisième tension (VREF2).

12. Dispositif ou procédé selon la revendication 11, dans lequel le premier circuit (134) fournit un signal provoquant la mise du noeud de sortie (106) de l'alimentation à découpage dans l'état de haute impédance.

13. Dispositif ou procédé selon la revendication 10 ou 11, dans lequel la troisième tension (VREF2) passe d'une valeur haute à une valeur basse lors du passage de la première phase de fonctionnement à la deuxième phase de fonctionnement.

14. Dispositif selon l'une quelconque des revendications 1, 3 à 6 et 8 à 13 ou procédé selon l'une quelconque des revendications 2 à 5 ou 7 à 13, dans lequel la première capacité (122) est connectée entre le noeud de sortie (106) et la masse, le noeud de sortie étant relié à un deuxième noeud (118) par une inductance (120).

15. Dispositif ou procédé selon la revendication 14, dans lequel l'alimentation à découpage comprend deux transistors (108, 110) connectés en série entre la source (112) de la première tension (VH) et une source (114) d'une troisième tension (VL), le point de connexion des deux transistors étant le deuxième noeud (118).

## Patentansprüche

1. Eine elektronische Vorrichtung (300) aufweisend ein Schaltnetzteil (102, 302, 602) des Buck- oder Tiefsetzsteller-Typs und eine Last (104), die durch das Schaltnetzteil versorgt wird, wobei das Schaltnetzteil Folgendes aufweist:
• erste (108) und zweite (110) Schalter, die in Reihe zwischen eine Quelle (112) mit einer zweiten Spannung (VH) und eine Quelle (114) mit einer dritten Spannung (VL) geschaltet sind;
• eine Schaltung (130) zum Erzeugen von Steuersignalen für erste und zweite Transistoren; und
• eine Anlaufschaltung (308), die als Eingang eine Ausgangsspannung, die auf einem Ausgangsknoten (106) des Schaltnetzteils anliegt, ein erstes Steuersignal (ENA) empfängt, das konfiguriert ist, um den Betrieb des Schaltnetzteils (302) zu ermöglichen, und eine erste Spannung (VREF1), und die an die Schaltung zum Erzeugen (130) ein zweites Signal (EN-FSM) liefert, das die Vorbereitung der Stromversorgung ermöglicht, und ein drittes Signal (SD-RDY), das die Schaltung zum Erzeugen (130) darüber informiert, dass es möglich ist, die Last (104) zu versorgen, wobei die Anlaufschaltung Folgendes aufweist:
o einen Komparator (412), wobei ein erster Eingang desselben mit einer Quelle der ersten Spannung (VREF1) gekoppelt ist und wobei ein zweiter Eingang desselben mit einem ersten Knoten (400) gekoppelt ist, wobei der Komparator einer Zustandsmaschine ein viertes Signal (CMP-OUT) bereitstellt, wobei die Zustandsmaschine ferner das erste Signal (ENA) empfängt und das zweite Signal (EN-FDM) und das dritte Signal (SD-RDY) bereitstellt;
o einen zweiten Kondensator (410), der zwischen den ersten Knoten (400) und die Masse gekoppelt ist;
o eine Stromquelle (404), die mit dem ersten Knoten (400) durch einen dritten Schalter (402) gekoppelt ist;
o einen vierten Schalter (406), der zwischen den ersten Knoten (400) und den Ausgangsknoten (106) des Schaltnetzteils gekoppelt ist; und
o einen fünften Schalter (408), der zwischen die Quelle der ersten Spannung (VREF1) und den ersten Knoten (400) gekoppelt ist, wobei das Netzteil konfiguriert ist, wie folgt zu funktionieren:
• wenn das erste Signal (ENA) Null ist, ist das Schaltnetzteil ausgeschaltet, und die Schaltung (130) zum Erzeugen von Steuersignalen stellt sicher, dass der Ausgangsknoten (106) des Netzteils (300) in einem Zustand mit hoher Impedanz ist;
• während des Neustarts des Schaltnetzteils ist das erste Signal (ENA) gleich 1 und es wird ein Initialisierungsschritt ausgeführt, während dem die Ausgangsspannung (Vout) auf den Wert der ersten Spannung (VREF1) gebracht wird,
• während des Initialisierungsschritts des Schaltnetzteils ist der vierte Schalter (406) geschlossen, der dritte (402) und fünfte (408) Schalter sind geöffnet
• wenn die Spannung (VN) auf dem ersten Knoten (400) niedriger ist als die erste Spannung (VREF1), ist der vierte Schalter (406) geschlossen, der dritte (402) und der fünfte (408) Schalter sind geöffnet, und das zweite Signal (EN-FSM) nimmt einen Wert an, der dem Einschalten des Schaltnetzteils in einem normalen Betriebsmodus entspricht,
• wenn die Spannung (VN) auf dem ersten Knoten (400) die erste Spannung (VREF1) erreicht, stellt die Zustandsmaschine (414) das Öffnen des dritten Schalters (402) und das Schließen des fünften Schalters (408) sicher und gewährleistet, dass der erste Schalter (108) geschlossen ist und dass der zweite Schalter geöffnet ist,
• wenn die Ausgangsspannung (Vout) die erste Spannung (VREF1) erreicht, kann die Netzspannung in einen Betriebsmodus eintreten, der von einem Benutzer gewählt wird, und
• wenn die Spannung auf dem ersten Knoten (400) höher ist als die erste Spannung (VREF1), nimmt das dritte Signal (SD-RDY) einen Wert an, der anzeigt, dass die Last angetrieben werden kann, der Ausgangsknoten wird in einen Zustand hoher Impedanz versetzt, der vierte Schalter ist offen, der fünfte Schalter (408) ist geschlossen, und der erste Kondensator in der Last wird entladen, der vierte Schalter (406) ist offen und der fünfte Schalter (408) ist geschlossen.

2. Ein Verfahren zum Steuern einer elektronischen Vorrichtung (300) aufweisend ein Schaltnetzteil (102, 302, 602) des Buck- oder Tiefsetzsteller-Typs und eine Last (104), die durch das Schaltnetzteil versorgt wird, wobei das Schaltnetzteil Folgendes aufweist:
• erste (108) und zweite (110) Schalter, die in Reihe zwischen eine Quelle (112) mit einer zweiten Spannung (VH) und eine Quelle (114) mit einer dritten Spannung (VL) geschaltet sind;
• eine Schaltung (130) zum Erzeugen von Steuersignalen für erste und zweite Transistoren; und
• eine Anlaufschaltung (308), die als Eingang eine Ausgangsspannung, die auf einem Ausgangsknoten (106) des Schaltnetzteils anliegt, ein erstes Steuersignal (ENA) empfängt, das konfiguriert ist, um den Betrieb des Schaltnetzteils (302) zu ermöglichen, und eine erste Spannung (VREF1), und die an die Schaltung zum Erzeugen (130) ein zweites Signal (EN-FSM) liefert, das die Vorbereitung der Stromversorgung ermöglicht, und ein drittes Signal (SD-RDY), das die Schaltung zum Erzeugen (130) darüber informiert, dass es möglich ist, die Last (104) zu versorgen, wobei die Anlaufschaltung Folgendes aufweist:
o einen Komparator (412), wobei ein erster Eingang desselben mit einer Quelle der ersten Spannung (VREF1) gekoppelt ist und wobei ein zweiter Eingang desselben mit einem ersten Knoten (400) gekoppelt ist, wobei der Komparator einer Zustandsmaschine ein viertes Signal (CMP-OUT) bereitstellt, wobei die Zustandsmaschine ferner das erste Signal (ENA) empfängt und das zweite Signal (EN-FDM) und das dritte Signal (SD-RDY) bereitstellt;
o einen zweiten Kondensator (410), der zwischen den ersten Knoten (400) und die Masse gekoppelt ist;
o eine Stromquelle (404), die mit dem ersten Knoten (400) durch einen dritten Schalter (402) gekoppelt ist;
o einen vierten Schalter (406), der zwischen den ersten Knoten (400) und den Ausgangsknoten (106) des Schaltnetzteils gekoppelt ist; und
o einen fünften Schalter (408), der zwischen die Quelle der ersten Spannung (VREF1) und den ersten Knoten (400) gekoppelt ist, wobei das Netzteil wie folgt funktioniert:
• wenn das erste Signal (ENA) Null ist, ist das Schaltnetzteil ausgeschaltet, und die Schaltung (130) zum Erzeugen von Steuersignalen stellt sicher, dass der Ausgangsknoten (106) des Netzteils (300) in einem Zustand mit hoher Impedanz ist;
• während des Neustarts des Schaltnetzteils ist das erste Signal (ENA) gleich 1 und es wird ein Initialisierungsschritt ausgeführt, während dem die Ausgangsspannung (Vout) auf den Wert der ersten Spannung (VREF1) gebracht wird,
• während des Initialisierungsschritts des Schaltnetzteils ist der vierte Schalter (406) geschlossen, der dritte (402) und fünfte (408) Schalter sind geöffnet,
• wenn die Spannung (VN) auf dem ersten Knoten (400) niedriger ist als die erste Spannung (VREF1), ist der vierte Schalter (406) geschlossen, der dritte (402) und der fünfte (408) Schalter sind geöffnet, und das zweite Signal (EN-FSM) nimmt einen Wert an, der dem Einschalten des Schaltnetzteils in einem normalen Betriebsmodus entspricht,
• wenn die Spannung (VN) auf dem ersten Knoten (400) die erste Spannung (VREF1) erreicht, stellt die Zustandsmaschine (414) das Öffnen des dritten Schalters (402) und das Schließen des fünften Schalters (408) sicher und gewährleistet, dass der erste Schalter (108) geschlossen ist und dass der zweite Schalter geöffnet ist,
• wenn die Spannung auf dem ersten Knoten (400) höher ist als die erste Spannung (VREF1), nimmt das dritte Signal (SD-RDY) einen Wert an, der anzeigt, dass die Last angetrieben werden kann, der Ausgangsknoten wird in einen Zustand hoher Impedanz versetzt, der vierte Schalter ist offen, der fünfte Schalter (408) ist geschlossen, und der erste Kondensator in der Last wird entladen, der vierte Schalter (406) ist offen und der fünfte Schalter (408) ist geschlossen.

3. Vorrichtung nach Anspruch 1 oder Verfahren nach Anspruch 2, wobei der dritte, vierte und fünfte Schalter konfiguriert sind, um von der Zustandsmaschine gesteuert zu werden.

4. Vorrichtung nach Anspruch 1 oder 3 oder Verfahren nach Anspruch 2 oder 3, wobei der dritte Schalter (406) geschlossen ist und der zweite Kondensator (410) aufgeladen wird, bis die Spannung über ihm die Spannung des Ausgangsknotens (106) ist.

5. Vorrichtung oder Verfahren nach Anspruch 4, wobei, nach dem Laden des zweiten Kondensators (410), wenn die Ausgangsspannung (Vout) kleiner als die erste Spannung (VREF1) ist, der dritte Schalter (406) geöffnet ist und der zweite Schalter (402) geschlossen ist, bis die Spannung des ersten Knotens (400) die erste Spannung (VREF1) ist, wobei der zweite Schalter (402) dann geöffnet wird und der vierte Schalter (408) geöffnet wird.

6. Vorrichtung oder Verfahren nach Anspruch 4 oder 5, wobei, nach dem Laden des zweiten Kondensators (410), wenn die Ausgangsspannung (Vout) größer als die erste Spannung (VREF1) ist, der vierte Schalter (408) geschlossen und der dritte Schalter geöffnet wird (406).

7. Vorrichtung nach Anspruch 1, wobei das Schaltnetzteil (602) eine Betriebsphase aufweist, während der sich der Ausgangsknoten (106) in einem Zustand mit hoher Impedanz befindet, während eine Referenzspannung (VREF2) von einem ersten hohen Wert (V2) zu einem ersten niedrigen Wert (V1) übergeht.

8. Verfahren nach Anspruch 2, wobei das Schaltnetzteil (602) eine Betriebsphase aufweist, während der sich der Ausgangsknoten (106) in einem Zustand mit hoher Impedanz befindet, während eine Referenzspannung (VREF2) von einem ersten hohen Wert (V2) zu einem ersten niedrigen Wert (V1) übergeht.

9. Vorrichtung nach Anspruch 7 oder Verfahren nach Anspruch 8, aufweisend eine Betriebsphase, während der die Referenzspannung (VREF2) schrittweise von einem zweiten niedrigen Wert (V1) auf einen zweiten hohen Wert (V2) ansteigt.

10. Vorrichtung nach Anspruch 1 oder Verfahren nach Anspruch 2, wobei das Schaltnetzteil (602) eine erste Betriebsphase aufweist, während der der Ausgangsknoten (106) des Schaltnetzteils durch den geschlossenen ersten Schalter (108) mit einer Quelle (112) einer zweiten Spannung (VH) gekoppelt ist, gefolgt von einer zweiten Betriebsphase, während der sich der Ausgangsknoten (106) des Netzteils in einem Zustand mit hoher Impedanz befindet, so dass sich der erste Kondensator (122), der mit dem Ausgangsknoten des Schaltnetzteils gekoppelt ist, zumindest teilweise in die Last (104) entlädt.

11. Vorrichtung oder Verfahren nach Anspruch 10, wobei eine erste Schaltung (134) angepasst ist, um die Spannung des Ausgangsknotens (106) mit einer dritten Spannung (VREF2) zu vergleichen.

12. Vorrichtung oder Verfahren nach Anspruch 11, wobei die erste Schaltung (134) ein Signal liefert, das das Setzen des Ausgangsknotens (106) des Schaltnetzteils in den Zustand mit hoher Impedanz bewirkt.

13. Vorrichtung oder Verfahren nach Anspruch 10 oder 11, wobei die dritte Spannung (VREF2) beim Übergang von der ersten Betriebsphase zur zweiten Betriebsphase von einem hohen Wert auf einen niedrigen Wert übergeht.

14. Vorrichtung nach irgendeinem der Ansprüche 1, 3 bis 6 oder 8 bis 13 oder Verfahren nach irgendeinem der Ansprüche 2 bis 5 oder 7 bis 13, wobei der erste Kondensator (122) zwischen dem Ausgangsknoten (106) und einer Masse verbunden ist, wobei der Ausgangsknoten durch eine Induktivität (120) an einen zweiten Knoten (118) gekoppelt ist.

15. Vorrichtung oder Verfahren nach Anspruch 14, wobei das Schaltnetzteil zwei Transistoren (108, 110) aufweist, die zwischen der Quelle (112) mit der ersten Spannung (VH) und einer Quelle (114) mit einer dritten Spannung (VL) in Reihe geschaltet sind, wobei der Verbindungspunkt der beiden Transistoren der zweite Knoten (118) ist.

## Claims

1. An electronic device (300) comprising a buck switched-mode power supply (102, 302, 602) and a load (104) powered by the switched-mode power supply, the switched-mode power supply comprising:
- first (108) and second (110) switches series coupled between a source (112) of a second voltage (VH) and a source (114) of a third voltage (VL);
- a circuit (130) for generating the control signals of the first and second transistors; and
- a start-up circuit (308) receiving in input an output voltage, on an output node (106) of the switched mode power supply, a first control signal (ENA) configured to allow the working of the switched-mode power supply (302), and a first voltage (VREF1), and providing to the circuit for generating (130) a second signal (EN-FSM) allowing the preparation of the power supply and a third signal (SD-RDY) informing the circuit for generating (130) that it is possible to power the load (104), the start-up circuit comprising:
o a comparator (412), a first input of which is coupled to a source of the first voltage (VREF1) and a second input of which is coupled to a first node (400), the comparator providing to a state machine a fourth signal (CMP-OUT), the state machine further receiving the first signal (ENA) and providing the second signal (EN-FDM) and the third signal (SD-RDY);
o a second capacitor (410) coupled between the first node (400) and the ground;
o a current source (404) coupled to the first node (400) by a third switch (402);
o a fourth switch (406) coupled between the first node (400) and the output node (106) of the switched-mode power supply; and
o a fifth switch (408) coupled between the source of the first voltage (VREF1) and the first node (400), the power supply being configured to work as follow:
- when the first signal (ENA) is null, the switched-mode power supply is off, and the circuit (130) for generating control signals ensure that the output node (106) of the power supply (300) is in a high impedance state;
- during the restart of the power supply, the first signal (ENA) is equal to 1 and an initialization step is executed, during which the output voltage (Vout) is brought to the value of the first voltage (VREF1),
- during the initialization step of the power supply, the fourth switch (406) is on, the third (402) and fifth (408) switches are off,
- if the voltage (VN) on the first node (400) is lower than the first voltage (VREF1), the fourth switch (406) is on, the third (402) and fifth (408) switches are off, and the second signal (EN-FSM) takes a value corresponding to the turning on of the power supply in a normal operating mode,
- when the voltage (VN) on the first node (400) reaches the first voltage (VREF1), the state machine (414) ensure the turning off of the third switch (402), the turning on of the fifth switch (408) and ensure that the first switch (108) is on and that the second switch is off,
- when the output voltage (Vout) reaches the first voltage (VREF1), the supply voltage can enter an operating mode chosen by a user, and
- if the voltage on the first node (400) is higher than the first voltage (VREF1), the third signal (SD-RDY) takes a value indicating that the load can be powered, the output node is put in a state of high impedance, the fourth switch is off, the fifth switch (408) is on, and the first capacitor is discharged in the load, the fourth switch (406) is off and the fifth switch (408) is on.

2. A method of controlling an electronic device (300) comprising a buck switched-mode power supply (102, 302, 602) and a load (104) powered by the switched-mode power supply, the switched-mode power supply comprising:
- first (108) and second (110) switches series coupled between a source of (112) of a first voltage (VH)and a source (114) of a third voltage (VL);
- a circuit (130) for generating the control signals of the first and second transistors; and
- a start-up circuit (308) receiving in input an output voltage, on an output node (106) of the switched mode power supply, a first control signal (ENA) configured to allow the working of the switched-mode power supply (302), and a first voltage (VREF1), and providing to the circuit for generating (130) a second signal (EN-FSM) allowing the preparation of the power supply and a third signal (SD-RDY) informing the circuit for generating (130) that it is possible to power the load (104), the start-up circuit comprising:
o a comparator (412), a first input of which is coupled to a source of the first voltage (VREF1) and a second input of which is coupled to a first node (400), the comparator providing to a state machine a fourth signal (CMP-OUT), the state machine further receiving the first signal (ENA) and providing the second signal (EN-FDM) and the third signal (SD-RDY);
o a second capacitor (410) coupled between the first node (400) and the ground;
o a current source (404) coupled to the first node (400) by a third switch (402);
o a fourth switch (406) coupled between the first node (400) and the output node (106) of the switched-mode power supply; and
o a fifth switch (408) coupled between the source of the first voltage (VREF1) and the first node (400), the power supply working as follow:
- when the first signal (ENA) is null, the switched-mode power supply is off, and the circuit (130) for generating control signals ensure that the output node (106) of the power supply (300) is in a high impedance state;
- during the restart of the power supply, the first signal (ENA) is equal to 1 and an initialization step is executed, during which the output voltage (Vout) is brought to the value of the first voltage (VREF1),
- during the initialization step of the power supply, the fourth switch (406) is on, the third (402) and fifth (408) switches are off,
- if the voltage (VN) on the first node (400) is lower than the first voltage (VREF1), the fourth switch (406) is on, the third (402) and fifth (408) switches are off, and the second signal (EN-FSM) takes a value corresponding to the turning on of the power supply in a normal operating mode,
- when the voltage (VN) on the first node (400) reaches the first voltage (VREF1), the state machine (414) ensure the turning off of the third switch (402), the turning on of the fifth switch (408) and ensure that the first switch (108) is on and that the second switch is off,
- if the voltage on the first node (400) is higher than the first voltage (VREF1), the third signal (SD-RDY) takes a value indicating that the load can be powered, the output node is put in a state of high impedance, the fourth switch is off, the fifth switch (408) is on, and the first capacitor is discharged in the load, the fourth switch (406) is off and the fifth switch (408) is on.

3. The device of claim 1 or method of claim 2, wherein the third, fourth and fifth switches are configured to be controlled by the state machine.

4. The device of claim 1 or 3 or the method of claim 2 or 3, wherein the third switch (406) is on and the second capacitor (410) is charged until the voltage thereacross is the voltage of the output node (106).

5. The device or method of claim 4, wherein, after the charge of the second capacitor (410), if the output voltage (Vout) is smaller than the first voltage (VREF1), then the third switch (406) is turned off and the second switch (402) is turned on until the voltage of the first node (400) is the first voltage (VREF1), the second switch (402) then being turned off and the fourth switch (408) being turned off.

6. The device or method of claim 4 or 5, wherein, after the charge of the second capacitor (410), if the output voltage (Vout) is greater than the first voltage (VREF1), then the fourth switch (408) is turned on and the third switch is turned off (406).

7. The device of claim 1, wherein the switched-mode power supply (602) has an operating phase during which the output node (106) is in a high impedance state while a reference voltage (VREF2) passes from a first high value (V2) to a first low value (V1).

8. The method of claim 2, wherein the switched-mode power supply (602) has an operating phase during which the output node (106) is in a high impedance state while a reference voltage (VREF2) passes from a first high value (V2) to a first low value (V1).

9. The device of claim 7 or method of claim 8, comprising an operating phase during which the reference voltage (VREF2) increases stepwise from a second low value (V1) to a second high value (V2).

10. The device of claim 1 or method of claim 2, wherein the switched-mode power supply (602) has a first operating phase during which the output node (106) of the power supply is coupled by the turned on first switch (108) to a source (112) of a second voltage (VH), followed by a second operating phase during which the output node (106) of the power supply is in a state of high impedance so that the first capacitor (122) connected to the output node of the power supply discharge at least partially in the load (104).

11. The device or method of claim 10, wherein a first circuit (134) is capable of comparing the voltage of the output node (106) with a third voltage (VREF2).

12. The device or method of claim 11, wherein the first circuit (134) supplies a signal causing the setting of the output node (106) of the switched-mode power supply to the high impedance state.

13. The device or method of claim 10 or 11, wherein the third voltage (VREF2) passes from a high value to a low value on passing from the first operating phase to the second operating phase.

14. The device of any of claims 1, 3 to 6 or 8 to 13 or method of any of claims 2 to 5 or 7 to 13, wherein the first capacitor (122) is connected between the output node (106) and a ground, the output node being coupled to a second node (118) by an inductance (120).

15. The device or method of claim 14, wherein the switched-mode power supply comprises two transistors (108, 110) series connected between the source (112) of the first voltage (VH) and a source (114) of a third voltage (VL), the junction point of the two transistors being the second node (118).
